# EUROPÄISCHE PATENTSCHRIFT

(11) **EP 2 866 111 B1**
(45) Veröffentlichungstag und Bekanntmachung des Hinweises auf die Patenterteilung: **15.05.2019**
(21) Anmeldenummer: 13190448.4
(22) Anmeldetag: 28.10.2013
(51) Int. Cl.: G05B 23/02

(54) **Testen eines Steuergerätes mittels einer Testumgebung**
Testing of a control device by means of a test environment
Test d'un appareil de commande au moyen d'un environnement de test

(43) Veröffentlichungstag der Anmeldung: 29.04.2015
(73) Patentinhaber: dSPACE digital signal processing and control engineering GmbH, 33102 Paderborn (DE)
(72) Erfinder: Senf, Matthias, 33100 Paderborn (DE)

(56) Entgegenhaltungen:
- EP-A1- 2 224 301
- WO-A1-2006/081869
- DE-A1- 10 065 508
- DE-A1-102007 029 137
- US-A1- 2008 154 532
- US-A1- 2010 250 220

## Beschreibung

Die Erfindung betrifft eine Anordnung zum Testen eines Steuergerätes mittels einer Testumgebung, umfassend ein computerbasiertes Testmanagementwerkzeug, wobei das Testmanagementwerkzeug zur modellbasierten Entwicklung und/oder Management wenigstens eines als Datenstruktur ausgestalteten Testplans ausgestaltet ist und der Testplan wenigstens einen Test aufweist. Die Erfindung betrifft weiterhin ein Verfahren zum Testen eines Steuergerätes mittels einer Testumgebung, umfassend den Schritt Entwickeln eines als Datenstruktur ausgestalteten modellbasierten Testplans zum Testen des Steuergerätes auf einem computerbasierten Testmanagementwerkzeug, wobei der Testplan wenigstens einen Test aufweist.

Bei der Entwicklung und dem Testen von Steuergeräten, so für Kraftfahrzeuge, entstehen eine Vielzahl von Daten, da bei der Durchführung von Testplänen in einer Testumgebung naturgemäß neben den Testplänen selbst auch eine Vielzahl von Testergebnissen entstehen. Darüber hinaus führen die wachsende Komplexität und die Anforderungen an die Funktionen von Steuergeräten dazu, dass der für den Test Verantwortliche immer neue auf die Komplexität und die Anforderung zugeschnittene Testfälle erstellen, verwalten und in der Folge durchführen muss.

Zum "Flaschenhals" wird in zunehmendem Maß die Testdurchführung selbst, da die Anforderungen an die Komplexität selbstredend Auswirkungen auf die Testumgebung haben und die Vielzahl an Tests die Durchführung insgesamt sehr aufwändig machen. Derzeit ist es de facto nicht mehr möglich, alle Testfälle mit jeder Umgebungskonstellation durchzuführen, da die zur Verfügung stehende Zeit innerhalb eines Entwicklungszyklus des Steuergerätes möglichst effektiv genutzt werden muss. Zusätzlich problematisch ist die physikalische Größe und das Gewicht der Testumgebungen, so insbesondere bei Hardware-in-the-Loop-Umgebungen, sowie die bei der Ausführung der Tests entstehende Geräuschentwicklung.

Die Vielzahl durchzuführender Tests hat zudem dazu geführt, dass während der Arbeitszeit der Testverantwortlichen die Auswertung der Tests durchgeführt wird und dabei nach eventuell aufgetretenen Fehlerursachen gesucht wird, und darauf aufbauend neue Tests entwickelt werden. Außerhalb der Arbeitszeit der Testverantwortlichen erfolgt dann meist die Durchführung der Tests, so beispielsweise nachts als so genannte "Lights-out-Tests".

Problematisch dabei ist jedoch, dass durch die automatische Durchführung der Tests einerseits und die Nichtanwesenheit der Verantwortlichen andererseits Fehler bei der Zusammenstellung der Tests oder beim Aufbau bzw. der Konfiguration der Testumgebung dazu führen können, dass ungültige also nicht durchführbare Tests durchgeführt werden sollen. Dies führt dazu, dass die komplette Ausführung der Tests, so auch nachfolgender Tests, blockiert ist oder eine Testsequenz innerhalb eines Testplans vollständig abbricht. Besonders problematisch ist dabei, dass oftmals Informationen bei der Testausführung verloren gehen, sodass die Fehlersuche sich umso schwieriger gestaltet.

Aus dem Stand der Technik bekannt sind Anordnungen zum Testen von Komponenten technischer Systeme. Beispielhaft offenbart die Anmeldeschrift WO2006/081869A1 eine Anordnung umfassend eine Werkzeug zur Erstellung von Tests, ein Werkzeug zur Ausführung der erstellten Tests und eine Datenbank, auf welche sowohl das Werkzeug zur Erstellung der Testpläne, als auch das Werkzeug zur Ausführung der Testpläne zugriff hat.

Ausgehend von dieser Situation ist die Aufgabe der Erfindung, eine Anordnung sowie ein Verfahren anzugeben, damit Steuergeräte wesentlich effizienter getestet werden können. Dabei besteht die Aufgabe insbesondere darin, die Durchführung der Tests zu optimieren, sodass selbst bei ungültigen und nicht anwendbaren Tests dennoch nicht ein Testplan mitten in der Ausführung abbricht und andererseits gewährleistet ist, dass bei Auftreten eines Fehlers bei der Testdurchführung die relevanten Informationen der Ausführung nicht verloren gehen, sodass ein Verantwortlicher ausreichend Rückmeldung erhält, um den Fehler, der zum Abbruch geführt hat, bestimmen zu können.

Die Aufgabe wird durch die Merkmale der unabhängigen Ansprüche gelöst. Vorteilhafte Ausgestaltungen sind in den abhängigen Ansprüchen angegeben.

Demnach erfolgt die Lösung der Aufgabe durch eine Anordnung zum Testen eines Steuergerätes mittels einer Testumgebung, umfassend ein computerbasiertes Testmanagementwerkzeug, wobei das Testmanagementwerkzeug zur modellbasierten Entwicklung und/oder Management wenigstens eines als Datenstruktur ausgestalteten Testplans zum Testen des Steuergerätes ausgestaltet ist und der Testplan wenigstens einen Test und eine Startbedingung zum Veranlassen der Ausführung des Testplans aufweist, ein computerbasiertes Testausführungssteuerungswerkzeug mit einem Testausführungswerkzeug, wobei das Testausführungssteuerungswerkzeug bei Erfüllung der Startbedingung zum Veranlassen der Ausführung des Testplans mittels des Testausführungswerkzeuges auf der Testumgebung ausgestaltet ist, und eine computerbasierte Datenbank, wobei die Datenbank zum Speichern des als Datenstruktur ausgestalteten Testplans und zum gemeinsamen, gleichzeitigen Zugriff auf den Testplan durch das Testmanagementwerkzeug und das Testausführungssteuerungswerkzeug ausgestaltet ist und sowohl das Testmanagementwerkzeug als auch das Testausführungssteuerungswerkzeug direkten Zugriff auf die in der Datenbank gespeicherten Testpläne haben und auf den jeweils gleichen in der Datenbank gespeicherten Testplan zugreifen, undwobei im Testmanagementwerkzeug die Testpläne verwaltet und attributiert werden, um die Anwendbarkeit der Testpläne zu beschreiben, und
wobei das Testausführungssteuerungswerkzeug (4) und das Testmanagementwerkzeug (5) auf räumlich voneinander entfernten und jeweils eigenen voneinander unabhängigen Computern (4, 5) angeordnet sind, und
wobei nur das Testausführungswerkzeug in direkter Kommunikation mit der Testumgebung steht, nicht jedoch das Testausführungssteuerungswerkzeug, und
wobei das Testausführungssteuerungswerkzeug (4) zum Rückspielen von durch die Testumgebung (2) gewonnenen Testdaten von dem mit dem Testplan (3) getesteten Steuergerät (1) an die Datenbank (9) ausgestaltet ist, wobei das Rückspielen der Testdaten bereits während der Durchführung des Testplans erfolgt.

Die Erfindung geht damit einen ganz neuen Weg, indem nämlich die Erstellung und Verwaltung von Testplänen von der Durchführung des Testplans getrennt wird, sodass sogar eine Parallelisierung möglich ist. Denn durch die räumliche Trennung des Testmanagementwerkzeugs, so also beispielsweise des Arbeitsplatzes des Testers, von der eigentlichen Testumgebung, so beispielsweise einer Hardware-in-the-Loop-Umgebung, können Testpläne durch den Tester einerseits entwickelt werden und andererseits kann parallel dazu ein Testplan, so beispielsweise ein bereits fertig erstellter Testplan, auf der Testumgebung ausgeführt werden.

Da jedoch das Testmanagementwerkzeug und das Testausführungssteuerungswerkzeug auf eine gemeinsame Datenbank zugreifen, welche einen so genannten gemeinsamen, gleichzeitigen Live-Zugriff auf die in der Datenbank gespeicherten Testpläne ermöglicht, ist sichergestellt, dass die Testpläne konsistent bleiben. Mit anderen Worten ist die Umgebung für die automatische Testausführung, vorliegend Testausführungssteuerungswerkzeug genannt, nicht in das Managementwerkzeug, vorliegend Testmanagementwerkzeug genannt, integriert, bedient sich jedoch aus dem gleichen in der Datenbank gespeicherten Datenbestand. Dem Testausführungssteuerungswerkzeug, auch Test Executor im Rahmen der Erfindung genannt, stehen also die konsistenten Daten des Testmanagementwerkzeugs zur Verfügung, ohne dass die Daten, so die Testpläne, exportiert oder getrennt bearbeitet werden müssen.

Bevorzugt ist das Testausführungssteuerungswerkzeug derart konfigurierbar, dass die Ausführung des Testplans nicht manuell gestartet werden muss. Gemäß der Erfindung ist vorgesehen, dass der Testplan eine Startbedingung enthält, das computerbasierte Testausführungssteuerungswerkzeug bevorzugt fortlaufend prüft, ob die Startbedingung erfüllt ist, und bei Erfüllung der Startbedingung automatisiert den Testplan auf der Testumgebung ausführt. Im Ergebnis kann der Tester, so ein Anwender, Testmanager und/oder Testverantwortlicher, an seinem Arbeitsplatz ganz bequem und innerhalb seiner "normalen Arbeitszeit" die Testpläne erstellen, während die Durchführung des Testplans an einem räumlich davon getrennten Ort automatisch geschieht. Dabei ist unter "räumlich voneinander entfernt von jeweils eigenen voneinander unabhängigen Computern" im Rahmen der Erfindung zu verstehen, dass die für das Testmanagementwerkzeug sowie das Testausführungssteuerungswerkzeug verwendeten Computer vollständig unabhängig voneinander sind, jedoch zum gemeinsamen Zugriff auf die Datenbank beispielsweise über ein Computernetzwerk miteinander verbunden sind. Vorzugsweise nimmt das Testausführungssteuerungswerkzeug die Ausführung des Testplans nicht selbst vor, sondern veranlasst ein vorzugsweise separates Testausführungswerkzeug den Testplan auszuführen. Bei einer derartigen Ausgestaltung steht nur das Testausführungswerkzeug in direkter Kommunikation mit der Testumgebung, nicht jedoch das Testausführungssteuerungswerkzeug. Das Testausführungswerkzeug kann beispielsweise als das kommerziell erwerbbare Produkt dSPACE AutomationDesk ausgestaltet sein und ist vorzugsweise Bestandteil der Testumgebung.

Weiter vorteilig ist, dass aufgrund der zeitlichen und räumlichen Trennung von Erstellung und Planung der Testpläne einerseits und Ausführung der Testpläne andererseits keine personelle Anwesenheit des Testers bei der Ausführung des Testplans benötigt wird, da die Ausführung automatisch nach Eintritt der Startbedingung vom Testausführungssteuerungswerkzeug gestartet wird. Zudem ist das Testmanagementwerkzeug während der Ausführung des Testplans durch das Testausführungssteuerungswerkzeug nicht blockiert, sodass ein weiterer Testplan entwickelt werden kann. Da sowohl das Testmanagementwerkzeug als auch das Testausführungssteuerungswerkzeug auf den jeweils gleichen in der Datenbank gespeicherten Testplan zugreifen, ist gewährleistet, dass bei nachträglichen Planungsänderungen des Testplans selbst kurz vor Ausführung des Testplans immer sichergestellt ist, dass das Testausführungssteuerungswerkzeug tatsächlich die nachträglichen Planungsänderungen des Testplans berücksichtigt.

Der Testplan enthält vorzugsweise wenigstens einen Test zum Testen des Steuergerätes, so beispielsweise eines Steuergerätes für ein Kraftfahrzeug. Der Test ist vorzugsweise zum Testen einer Funktion des Steuergerätes ausgestaltet. Die Datenbank kann grundsätzlich als eine beliebige aus dem Stand der Technik bekannte Datenbank ausgestaltet sein, so beispielsweise als eine relationale Datenbank und mittels einer Datenbanksprache SQL etc. beschreibbar sein.

Das Testmanagementwerkzeug ist derart ausgestaltet, dass die Testpläne für das Steuergerät nicht nur entwickelt, sondern auch verwaltet und/oder attributiert werden können. Beispielsweise kann vorgesehen sein, dass bestimmte Testpläne nur für ein bestimmtes Steuergerät, so vorzugsweise aufgrund eines Attributes, verwendbar sind. Ferner ist bevorzugt, dass für die einzelnen Testpläne die Ausführung mittels der Starbedingung derart gestaltbar ist, so beispielsweise festgelegt werden kann, zu welcher Zeit der konkrete Testplan durch die Testumgebung auszuführen ist.

Bei einer bevorzugten Ausführungsform sind das Testausführungssteuerungswerkzeug und das Testmanagementwerkzeug auf wenigstens 5 m, 10 m, 20 m, 50 m oder 100 m räumlich voneinander entfernten Computern in vorzugsweise separaten Räumen eines Gebäudes oder in verschiedenen Gebäuden angeordnet. Dabei kann ferner vorgesehen sein, dass das Testausführungssteuerungswerkzeug und/oder das Testmanagementwerkzeug als Software auf den derart entfernt voneinander angeordneten Computern ausgestaltet ist und beispielsweise jeweils über eine grafische Benutzeroberfläche und entsprechenden Eingabemöglichkeiten mittels Tastatur und/oder Maus verfügt.

Grundsätzlich kann die Startbedingung beliebig ausgestaltet sein. Nach einer besonders bevorzugten Ausgestaltung umfasst die Startbedingung eine Uhrzeit, eine Priorität, eine Verfügbarbarkeit der Testumgebung und/oder eine Fertigstellung eines anderen Testplans. Somit kann also beispielsweise vorgesehen sein, dass ein weiterer Testplan erst nach Fertigstellung bzw. Durchführung eines vorherigen, anderen Testplans als Startbedingung gestartet wird. Ebenso kann vorgesehen sein, dass mittels einer Uhrzeit als Startbedingung die Ausführung eines Testplans nachts erfolgt, und beispielsweise darauf folgend die Ausführung eines weiteren Testplans auf der Testumgebung erfolgt. Ebenso kann die Startbedingung eine Kombination vorgenannter oder weiterer Merkmale sein, sodass beispielsweise die Ausführung eines Testplans auf der Testumgebung erst ab einer bestimmten Uhrzeit und nach Fertigstellung eines anderen, vorherigen Testplans erfolgt.

Weiter ist das Testausführungssteuerungswerkzeug zum Rückspielen von durch die Testumgebung gewonnenen Testdaten von dem mit dem Testplan getesteten Steuergerät an die Datenbank ausgestaltet. In derartiger Ausgestaltung wird gewährleistet, dass Testdaten vorzugsweise kontinuierlich und unmittelbar nach der Gewinnung an die Datenbank übertragen werden, sodass selbst bei einem unvorhergesehenen Abbruch des Testplans die bei den zumindest teilweise Ausführungen des Testplans gewonnenen Testdaten durch das Testmanagementwerkzeug geprüft werden können, um die Ursache des ungeplanten Abbruchs feststellen zu können. Dabei ist besonders bevorzugt, dass das Rückspielen der Testdaten bereits während der Durchführung des Testplans erfolgt, sodass beispielsweise auch durch das Testmanagementwerkzeug in Realtime die gewonnenen Testdaten ausgewertet und gegebenenfalls visualisiert werden können.

Nach einer weiteren bevorzugten Ausführungsform ist vorgesehen, dass die Anordnung eine Mehrzahl von Testausführungssteuerungswerkzeugen aufweist, wobei jedes der Testausführungssteuerungswerkzeuge zum Veranlassen der Ausführung eines jeweiligen Testplans auf einer dem jeweiligen Testausführungssteuerungswerkzeug zugeordneten Testumgebung ausgestaltet ist. Dadurch, dass die verschiedenen Testausführungssteuerungswerkzeuge jeweils gemeinsamen, gleichzeitigen Zugriff auf die Datenbank haben, ist den jeweiligen Testausführungssteuerungswerkzeugen damit auch bekannt, welche Testpläne auf den jeweils anderen Testausführungssteuerungswerkzeugen ausgeführt werden. Insofern ergibt sich auch die Möglichkeit, mehrere Testausführungssteuerungswerkzeuge gleichzeitig an verschiedenen Testumgebungen zu betreiben, sodass beispielsweise auch eine Lastverteilung realisiert werden kann, innerhalb derer das jeweilige Testausführungssteuerungswerkzeug immer nur den nächsten Testplan einer vorgegebenen, geordneten Reihe von Testplänen der Datenbank entnimmt, den jeweiligen Testplan ausführt und mittels Rückspielung der Testdaten in die Datenbank die anderen verbleibenden Testausführungssteuerungswerkzeuge in Kenntnis darüber setzt. Alternativ oder zusätzlich kann das jeweilige Testausführungssteuerungswerkzeug bereits bei Beginn der Testausführung die anderen Testausführungssteuerungswerkzeuge in Kenntnis setzen.

Gemäß einer besonders bevorzugten Ausgestaltung umfasst die Anordnung ebenso die Testumgebung, wobei die Testumgebung zum Veranlassen der Ausführung des Testplans ausgestaltet ist und das Testausführungssteuerungswerkzeug räumlich der Testumgebung zugeordnet an der Testumgebung angeordnet ist. Demnach ist also bevorzugt, dass in räumlicher Trennung das Testmanagementwerkzeug entfernt von dem räumlich gemeinsam angeordneten Testausführungssteuerungswerkzeug sowie der Testumgebung angeordnet ist. Besonders bevorzugt ist das Testmanagementwerkzeug durch das kommerziell verfügbare Produkt dSPACE SYNECT ausgestaltet, nämlich als Datenmanagement- und Collaboration Software zur modellbasierten Entwicklung von Testplänen für Steuergeräte.

Grundsätzlich kann die Testumgebung beliebig ausgestaltet sein, wobei jedoch besonders bevorzugt die Testumgebung als Modell-in-the-Loop, als Software-in-the-Loop, als Processor-in-the-Loop und/oder als Hardware-in-the-Loop Umgebung ausgestaltet ist. Derartige Umgebungen sind bevorzugt zum Testen der Funktionen, der Systemintegration und der Kommunikation von Steuergeräten ausgestaltet, wobei die zu testenden Steuergeräte insbesondere in Fahrzeugen, Flugzeugen und Robotern einsetzbar sind. Durch eine Hardware-in-the-Loop-Simulation lässt sich die technische Umgebung der Steuergeräte sowie miteinander verbundener Systemteile simulieren, wobei das grundsätzliche Ziel derartiger Simulation ist, Fehler in Steuergeräten zu finden, um die Software-Qualität des Steuergeräts bereits in einem frühen Entwicklungsstadium zu erhöhen. Untersuchungen haben gezeigt, dass durch Hardware-in-the-Loop-Simulation 90% der Steuergerätefehler gefunden werden können, sodass die Markteinführungszeit des Steuergerätes deutlich verkürzt und Rückrufaktionen und die damit verbundenen Image-Schäden entfallen. Insofern stellt die Erfindung eine wesentliche Verbesserung gegenüber dem Stand der Technik dar, da Steuergeräte nunmehr weitaus effizienter und verlässlicher bei geringerem Ressourceneinsatz getestet werden können.

Nach einer weiteren bevorzugten Ausgestaltung ist vorgesehen, dass der Testplan eine Variantenkonfiguration umfasst und das Testmanagementwerkzeug zur Konsistenzprüfung der Varianten in Bezug auf den Testplan ausgestaltet ist und/oder das Testausführungssteuerungswerkzeug zur Konfiguration der Testumgebung entsprechend der Variantenkonfiguration vor Ausführung des Testplans ausgestaltet ist. Gemäß dieser Ausgestaltung kann also vor Ausführung des Testplans auf der Testumgebung die Testumgebung selbst entsprechend der für die Ausführung des Testplans benötigten Varianten konfiguriert werden, so beispielsweise eingestellt werden, ob das Steuergerät für einen Ottomotor oder einen Dieselmotor verwendet werden soll. Ebenso kann geprüft werden, ob die Varianten überhaupt konsistent sind, also in Bezug auf den konkreten Testplan verwendet werden können und/oder der Testplan überhaupt auf der Testumgebung hinsichtlich der benötigten Varianten ausführbar ist.

Die Aufgabe der Erfindung wird weiterhin gelöst durch ein Verfahren zum Testen eines Steuergerätes mittels einer Testumgebung, umfassend die Schritte:
a) Entwickeln eines als Datenstruktur ausgestalteten Testplans zum Testen des Steuergerätes im Rahmen einer modellbasierten Entwicklung von Steuergeräten auf einem computerbasierten Testmanagementwerkzeug, wobei der Testplan wenigstens einen Test und eine Startbedingung zum Veranlassen der Ausführung des Testplans aufweist,
b) Speichern des Testplans in einer computerbasierten Datenbank, und
c) bei Erfüllung der Startbedingung Veranlassen der Ausführung des Testplans auf der Testumgebung, wobei das Veranlassen der Ausführung des Testplans (3) durch ein Testausführungssteuerungswerkzeug (4) erfolgt und die Ausführung des Testplans auf der Testumgebung (2) mittels eines Testausführungswerkzeuges erfolgt, und
die computerbasierte Datenbank (9) zum gemeinsamen, gleichzeitigen Zugriff auf den Testplan (3) durch das Testmanagementwerkzeug (5) und das Testausführungssteuerungswerkzeug (4) ausgestaltet ist und sowohl das Testmanagementwerkzeug als auch das Testausführungssteuerungswerkzeug direkten Zugriff auf die in der Datenbank gespeicherten Testpläne haben und auf den jeweils gleichen in der Datenbank gespeicherten Testplan zugreifen, undwobei im Testmanagementwerkzeug die Testpläne verwaltet und attributiert werden, um die Anwendbarkeit der Testpläne zu beschreiben, und
wobei das Testausführungssteuerungswerkzeug (4) und das Testmanagementwerkzeug (5) auf räumlich voneinander entfernten und jeweils eigenen voneinander unabhängigen Computern (4, 5) angeordnet sind, und
wobei nur das Testausführungswerkzeug in direkter Kommunikation mit der Testumgebung steht, nicht jedoch das Testausführungssteuerungswerkzeug, und
umfassend den Schritt: d) Rückspielen von durch die Testumgebung (2) gewonnenen Testdaten von dem mit dem Testplan (3) getesteten Steuergerät (1) an die Datenbank (9), wobei das Rückspielen der Testdaten bereits während der Durchführung des Testplans erfolgt.

Grundidee dieses Verfahrens ist, ebenso wie bei der vorab beschriebenen Anordnung, dass die automatische Ausführung des Testplans räumlich entfernt von der Entwicklung des Testplans gemäß Schritt a) stattfindet, wobei jedoch gemäß Schritt b) das Testmanagementwerkzeug und das Testausführungssteuerungswerkzeug auf die gleiche Datenbank zugreifen, um den Testplan abzuspeichern bzw. zu ändern. Das bedeutet also, dass selbst während der Ausführung des Testplans, wozu das Verfahren bevorzugt mittels des Schrittes d) Rückspielen von durch die Testumgebung gewonnenen Testdaten von den mit dem Testplan getesteten Steuergerät an die Datenbank weitergebildet ist, die in der Datenbank gespeicherten Datenstrukturen konsistent gehalten werden, sodass sowohl das Testmanagementwerkzeug als auch das Testausführungssteuerungswerkzeug gemeinsam und gleichzeitig Zugriff auf die derart konsistent und aktuell gehaltenen Datenstrukturen haben.

Bei einer bevorzugten Weiterbildung umfasst der Testplan eine Variantenkonfiguration, wobei das Verfahren die weiteren Schritte:
a') Prüfen der Konsistenz der Varianten in Bezug auf den Testplan durch das Testmanagementwerkzeug, und/oder
c') Konfigurieren der Testumgebung entsprechend der Variantenkonfiguration vor Ausführung des Testplans durch das Testausführungssteuerungswerkzeug umfasst.

Insofern kann gemäß dieser Ausgestaltung die Testumgebung vor Ausführung des Testplans entsprechend konfiguriert werden, so beispielsweise durch Flashen einer passenden Software, sodass hinsichtlich der Varianten, wie Typ des mit dem Steuergerät zu steuernden Motors, die Konfiguration der Testumgebung flexibel eingestellt werden kann. Das Testausführungssteuerungswerkzeug hat somit direkten Zugriff einerseits auf die in der Datenbank gespeicherten Testpläne, sowie andererseits auf die Testumgebung, sodass die Anpassung der Testumgebung hinsichtlich des konkret zu testenden Testplans ermöglicht ist.

Nachfolgend wird die Erfindung unter Bezugnahme auf die anliegende Zeichnung anhand einer bevorzugten Ausführungsform näher erläutert.

Es zeigen
- Fig. 1: eine Anordnung zum Testen eines Steuergerätes gemäß einer bevorzugten Ausführungsform der Erfindung in einer schematischen Ansicht, und
- Fig. 2: ein Verfahren zum Testen des Steuergerätes gemäß der bevorzugten Ausführungsform der Erfindung in einem Ablaufdiagramm.

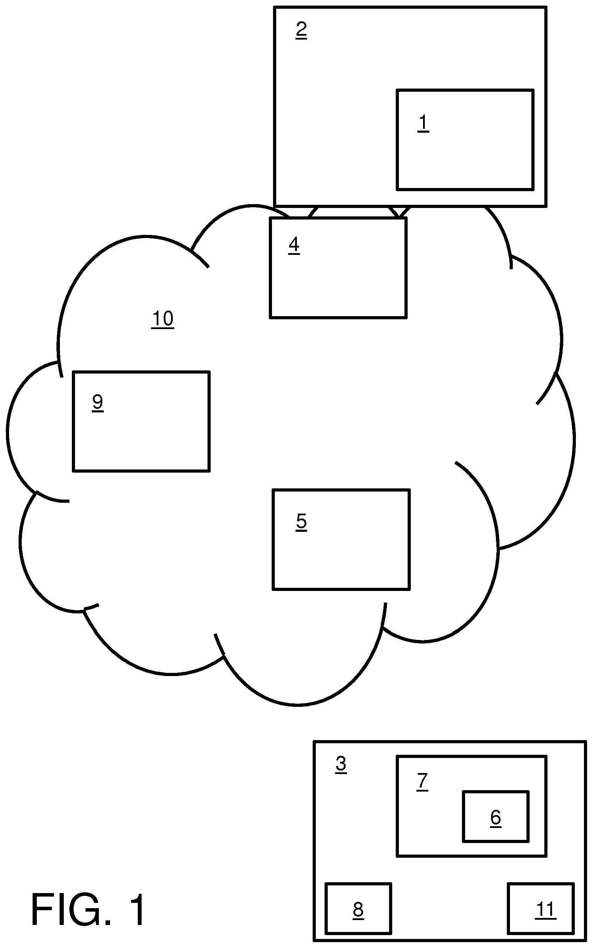

Fig. 1 zeigt eine Anordnung zum Testen eines Steuergerätes 1 mittels einer Testumgebung 2, wobei die Testumgebung 2 als Hardware-in-the-Loop-Testumgebung ausgestaltet ist. Zum Veranlassen der Ausführung eines Testplans 3 auf der Testumgebung 2 ist ein computerbasiertes Testausführungssteuerungswerkzeug 4 vorgesehen, welches elektrisch mit der Testumgebung 2 verbunden ist, so beispielsweise über Schnittstellenkarten.

Räumlich entfernt von dem Testausführungssteuerungswerkzeug 4 ist auf einem unabhängigen Computersystem ein computerbasiertes Testmanagementwerkzeug 5 angeordnet. Das Testmanagementwerkzeug 5 ist beispielsweise als Software dSPACE SYNECT ausgestaltet und ermöglicht die modellbasierte Entwicklung und/oder das Management des als Datenstruktur ausgestalteten Testplans 3 zum Testen des Steuergerätes 1. Das Steuergerät 1 ist dabei beispielsweise das Steuergerät 1 eines Kraftfahrzeugs, eines Flugzeugs oder eines Roboters. Der Testplan 3 besteht aus wenigstens einer einen Test 6 aufweisenden Testsequenz 7 sowie einer Startbedingung 8 zum Veranlassen der Ausführung des Testplans 3. Durch jeden Test 6 der Testsequenz 7 kann eine Funktion des Steuergerätes 1 getestet werden.

Die Anordnung weist ferner eine computerbasierte Datenbank 9 auf, welche in Wirkverbindung sowohl mit dem Testmanagementwerkzeug 5 und dem Testausführungssteuerungswerkzeug 4 steht. Dabei ist die Datenbank 9 zum Speichern des als Datenstruktur ausgestalteten Testplans 3 ausgestaltet, wobei sowohl das Testausführungssteuerungswerkzeug 4 als auch das Testmanagementwerkzeug 5 gemeinsam und gleichzeitig Zugriff auf den Testplan 3 haben. Die Verbindung zwischen der Datenbank 9, dem Testausführungssteuerungswerkzeug 4 sowie dem Testmanagementwerkzeug 5 ist über ein Netzwerk 10 realisiert.

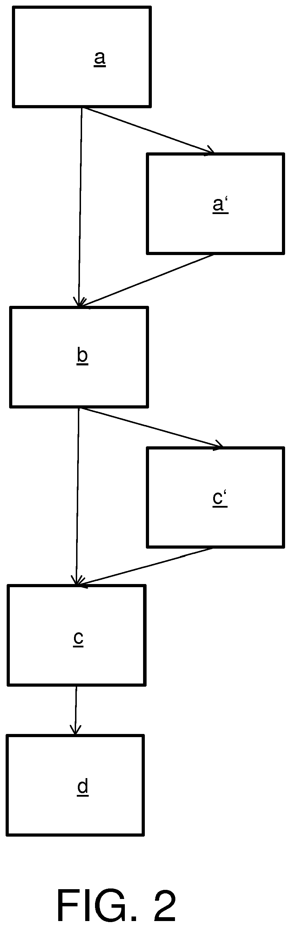

Zum Testen des Steuergerätes 1 wird nun zunächst gemäß dem in Fig. 2 dargestellten Schritt a) ein Testplan 3 auf dem Testmanagementwerkzeug 5 entwickelt und gemäß Schritt b) in der Datenbank 9 gespeichert. Der Testplan 3 umfasst ferner eine Variantenkonfiguration 11, so beispielsweise Informationen darüber, ob das Steuergerät 1 für einen Ottomotor oder einen Dieselmotor ausgestaltet ist. Gemäß Schritt a') wird durch das Testmanagementwerkzeug 5 zudem geprüft, ob die Varianten der Variantenkonfiguration 11 in Bezug auf den Testplan 3 konsistent sind, also der Testplan 3 überhaupt zum Testen des Steuergerätes 1 verwendet werden kann.

In Schritt c) prüft das Testausführungssteuerungswerkzeug 4 zunächst, ob die Startbedingung 8 erfüllt ist, also ob mit der Ausführung des Testplans 3 auf der Testumgebung 2 begonnen werden kann. Die Startbedingung 8 kann beispielsweise als Uhrzeit, als Priorität, als Verfügbarkeit der Testumgebung 2 ausgestaltet sein. Sofern also auf der Testumgebung 2 beispielsweise ein vorheriger Testplan 3 fertig abgearbeitet worden ist und somit die Testumgebung 2 frei ist, kann dann mittels Schritt c') die Testumgebung 2 entsprechend der Variantenkonfiguration 11 konfiguriert werden. Nach entsprechender Konfiguration kann das Testausführungssteuerungswerkzeug 4 dann den Testplan 3 auf der Testumgebung 2 ausführen.

Im Testmanagementwerkzeug 5 werden die Testpläne 3 verwaltet und attributiert, sodass beispielsweise die Anwendbarkeit der Testpläne 3 beschrieben werden können, also ob eine bestimmte Testsequenz 7 oder ein Test 6 nur für eine definierte Menge oder Kombinationen von Variantenkonfiguration 11 anwendbar ist. Damit kann sichergestellt werden, dass nicht Testpläne 3 auf der Testumgebung 2 ausgeführt werden, die überhaupt nicht für die Ausführung auf der Testumgebung 2 vorgesehen sind und gegebenenfalls zu einem Ausfall der Testumgebung 2 führen. Ferner hat ein Bediener die Möglichkeit, Testpläne 3 für die zeitliche Ausführung zusammenzustellen und die Ausführung anhand der Startbedingung 8 zu planen. Durch Definition der Variantenkonfiguration 11 lässt sich zudem die Konfiguration der Testumgebung 2 definieren.

Während das Testmanagementwerkzeug 5 beispielsweise in einem Büro des Anwenders installiert ist, hat das konkret 50 m entfernt installierte Testausführungssteuerungswerkzeug 4 Zugriff auf die in der Datenbank 9 gespeicherten Testpläne 3, so nämlich einerseits auf die Testsequenzen 7 mit den Tests 6 sowie der Startbedingung 8 und andererseits auf die Testumgebung 2 sowie das damit verbundene Steuergerät 1.

Sofern nun exemplarisch ein Anwender über Nacht zunächst Testpläne 3 einer Modellreihe für den deutschen Markt durchführen möchte, um daran anschließend Testfälle für den amerikanischen Markt durchzuführen, kann der Anwender am Testmanagementwerkzeug 5 zunächst zwei Testpläne 3 erstellen. Das Testmanagementwerkzeug 5 stellt bei der Erstellung der Testpläne 3 bereits sicher, dass nur ausführbare Testpläne 3 ausgewählt werden können. Nach Terminierung der Ausführungen der Testpläne 3 durch entsprechende zeitliche Definition der Startbedingungen 8 erfolgt die automatische Ausführung der Testpläne 3 mittels des Testausführungssteuerungswerkzeugs 4.

So kann der Anwender beispielsweise definieren, dass der erste Testplan 3 um 18:00 Uhr starten soll, während der zweite Testplan 3 nach Fertigstellung des ersten Testplans 3 ausgeführt werden soll. Durch Annotation der Variantenkonfiguration 11 der Testpläne 3, so beispielsweise als Deutschland und Amerika, wird die Testumgebung 2 durch das Testausführungssteuerungswerkzeug 4 konfiguriert.

Während Durchführung des Testplans 3 auf der Testumgebung 2 überwacht das Testausführungssteuerungswerkzeug 4 den Testfortschritt und spielt gemäß dem in Fig. 2 dargestellten Schritt d) von der Testumgebung 2 gewonnene Testdaten von dem mit dem Testplan 3 getesteten Steuergerät 1 in die Datenbank 9 zurück. Das Testmanagementwerkzeug 5 hat dann wiederum Zugriff auf die derart gewonnenen Testdaten, die dann beispielsweise grafisch ausgewertet werden können. Zudem besteht die Möglichkeit, dass die Anordnung eine Mehrzahl von Testausführungssteuerungswerkzeugen 4 aufweist, die jeweils mit separaten Testumgebungen 2 verbunden sind, sodass eine Mehrzahl von Testplänen 3 parallel ausgeführt werden können.

**Bezugszeichenliste**

| | |
|---|---|
| Steuergerät | 1 |
| Testumgebung | 2 |
| Testplan | 3 |
| Testausführungssteuerungswerkzeug | 4 |
| Testmanagementwerkzeug | 5 |
| Test | 6 |
| Testsequenz | 7 |
| Startbedingung | 8 |
| Datenbank | 9 |
| Netzwerk | 10 |
| Variantenkonfiguration | 11 |

## Patentansprüche

1. Anordnung zum Testen eines Steuergerätes (1) mittels einer Testumgebung (2), umfassend
ein computerbasiertes Testmanagementwerkzeug (5), wobei das Testmanagementwerkzeug (5) zur modellbasierten Entwicklung und/oder Management wenigstens eines als Datenstruktur ausgestalteten Testplans (3) zum Testen des Steuergerätes (1) ausgestaltet ist und der Testplan (3) wenigstens einen Test (6) und eine Startbedingung (8) zum Veranlassen der Ausführung des Testplans (3) aufweist,
ein computerbasiertes Testausführungssteuerungswerkzeug (4) mit einem Testausführungswerkzeug, wobei das Testausführungssteuerungswerkzeug (4) bei Erfüllung der Startbedingung (8) zum Veranlassen der Ausführung des Testplans (3) mittels des Testausführungswerkzeuges auf der Testumgebung (2) ausgestaltet ist, und
eine computerbasierte Datenbank (9), wobei die Datenbank (9) zum Speichern des als Datenstruktur ausgestalteten Testplans (3) und zum gemeinsamen, gleichzeitigen Zugriff auf den Testplan (3) durch das Testmanagementwerkzeug (5) und das Testausführungssteuerungswerkzeug (4) ausgestaltet ist und sowohl das Testmanagementwerkzeug als auch das Testausführungssteuerungswerkzeug direkten Zugriff auf die in der Datenbank gespeicherten Testpläne haben und auf den jeweils gleichen in der Datenbank gespeicherten Testplan zugreifen, und wobei im Testmanagementwerkzeug die Testpläne verwaltet und attributiert werden, um die Anwendbarkeit der Testpläne zu beschreiben, und
wobei das Testausführungssteuerungswerkzeug (4) und das Testmanagementwerkzeug (5) auf räumlich voneinander entfernten und jeweils eigenen voneinander unabhängigen Computern (4, 5) angeordnet sind, und
wobei nur das Testausführungswerkzeug in direkter Kommunikation mit der Testumgebung steht, nicht jedoch das Testausführungssteuerungswerkzeug, und
wobei das Testausführungssteuerungswerkzeug (4) zum Rückspielen von durch die Testumgebung (2) gewonnenen Testdaten von dem mit dem Testplan (3) getesteten Steuergerät (1) an die Datenbank (9) ausgestaltet ist, wobei das Rückspielen der Testdaten bereits während der Durchführung des Testplans erfolgt.

2. Anordnung nach dem vorhergehenden Anspruch, wobei das Testausführungssteuerungswerkzeug (4) und das Testmanagementwerkzeug (5) auf wenigstens 5m, 10m, 20m, 50m oder 100m räumlich voneinander entfernten Computern (4, 5) angeordnet sind.

3. Anordnung nach einem der vorhergehenden Ansprüche, wobei die Startbedingung (8) eine Uhrzeit, eine Priorität, eine Verfügbarbarkeit der Testumgebung (2) und/oder eine Fertigstellung eines anderen Testplans (3) umfasst.

4. Anordnung nach einem der vorhergehenden Ansprüche, mit einer Mehrzahl von Testausführungssteuerungswerkzeugen (4), wobei jedes der Testausführungssteuerungswerkzeuge (4) zum Veranlassen der Ausführung eines jeweiligen Testplans (3) auf einer dem jeweiligen Testausführungssteuerungswerkzeug (4) zugeordneten Testumgebung (2) ausgestaltet ist.

5. Anordnung nach einem der vorhergehenden Ansprüche, umfassend die Testumgebung (2), wobei die Testumgebung (2) zum Veranlassen der Ausführung des Testplans (3) ausgestaltet ist und das Testausführungssteuerungswerkzeug (4) räumlich der Testumgebung (2) zugeordnet an der Testumgebung (2) angeordnet ist.

6. Anordnung nach einem der beiden vorhergehenden Ansprüche, wobei die Testumgebung (2) als Modell-in-the-Loop, als Software-in-the-Loop, als Processor-in-the-Loop und/oder als Hardware-in-the-Loop Umgebung ausgestaltet ist.

7. Anordnung nach dem vorhergehenden Anspruch, wobei der Testplan (3) eine Variantenkonfiguration (11) umfasst und das Testmanagementwerkzeug (5) zur Konsistenzprüfung der Varianten in Bezug auf den Testplan (3) ausgestaltet ist und/oder das Testausführungssteuerungswerkzeug (4) zur Konfiguration der Testumgebung (2) entsprechend der Variantenkonfiguration (11) vor Ausführung des Testplans (3) ausgestaltet ist.

8. Verfahren zum Testen eines Steuergerätes (1) mittels einer Testumgebung (2), umfassend die Schritte:
a) Entwickeln eines als Datenstruktur ausgestalteten Testplans (3) zum Testen des Steuergerätes (1) im Rahmen einer modellbasierten Entwicklung von Steuergeräten auf einem computerbasierten Testmanagementwerkzeug (5), wobei der Testplan (3) wenigstens einen Test (6) und eine Startbedingung (8) zum Veranlassen der Ausführung des Testplans (3) aufweist,
b) Speichern des Testplans (3) in einer computerbasierten Datenbank (9), und
c) bei Erfüllung der Startbedingung (8) Veranlassen der Ausführung des Testplans (3) auf der Testumgebung (2), wobei das Veranlassen der Ausführung des Testplans (3) durch ein Testausführungssteuerungswerkzeug (4) erfolgt und die Ausführung des Testplans auf der Testumgebung (2) mittels eines Testausführungswerkzeuges erfolgt, und
die computerbasierte Datenbank (9) zum gemeinsamen, gleichzeitigen Zugriff auf den Testplan (3) durch das Testmanagementwerkzeug (5) und das Testausführungssteuerungswerkzeug (4) ausgestaltet ist und sowohl das Testmanagementwerkzeug als auch das Testausführungssteuerungswerkzeug direkten Zugriff auf die in der Datenbank gespeicherten Testpläne haben und auf den jeweils gleichen in der Datenbank gespeicherten Testplan zugreifen, undwobei im Testmanagementwerkzeug die Testpläne verwaltet und attributiert werden, um die Anwendbarkeit der Testpläne zu beschreiben, und
wobei das Testausführungssteuerungswerkzeug (4) und das Testmanagementwerkzeug (5) auf räumlich voneinander entfernten und jeweils eigenen voneinander unabhängigen Computern (4, 5) angeordnet sind, und
wobei nur das Testausführungswerkzeug in direkter Kommunikation mit der Testumgebung steht, nicht jedoch das Testausführungssteuerungswerkzeug, und
umfassend den Schritt: d) Rückspielen von durch die Testumgebung (2) gewonnenen Testdaten von dem mit dem Testplan (3) getesteten Steuergerät (1) an die Datenbank (9), wobei das Rückspielen der Testdaten bereits während der Durchführung des Testplans erfolgt.

9. Verfahren nach dem vorhergehenden Anspruch, wobei der Testplan (3) eine Variantenkonfiguration (11) umfasst, mit den Schritten:
a') Prüfen der Konsistenz der Varianten in Bezug auf den Testplan (3) durch das Testmanagementwerkzeug (5), und/oder
c') Konfigurieren der Testumgebung (2) entsprechend der Variantenkonfiguration (11) vor Ausführung des Testplans (3) durch das Testausführungssteuerungswerkzeug (4) .

## Claims

1. An arrangement for testing a control device (1) by means of a test environment (2), comprising
a computer-based test management tool (5), the test management tool (5) being implemented for the model-based development and/or management of at least one test plan (3) implemented as a data structure for testing the control device (1) and the test plan (3) comprising at least one test (6) and a start condition (8) for initiating the execution of the test plan (3),
a computer-based test execution control tool (4) having a test execution tool, the test execution control tool (4) being implemented for initiating execution of the test plan (3) on fulfillment of the start condition (8) by means of the test execution tool on the test environment (2);
a computer-based database (9), the database (9) being implemented for storing the test plan (3) implemented as a data structure and for shared, simultaneous access to the test plan (3) by the test management tool (5) and the test execution control tool (4) and both the test management tool and the test execution control tool having direct access to the test plans stored in the database and accessing the respective same test plan stored in the database, and the test plans being managed and attributed in the test management tool to describe the applicability of the test plans, and the test execution control tool (4) and the test management tool (5) being disposed on computers (4, 5) that are spatially separate from each other and respectively independent of each other, and
only the test execution tool being in direct communication with the test environment, not, however, the test execution control tool, and
the test execution control tool (4) being implemented to export test data obtained by the test environment (2) from the control device (1) tested by the test plan (3) to the database (9), the test data already being exported during the implementation of the test plan.

2. The arrangement according to the preceding claim, wherein the test execution control tool (4) and the test management tool (5) are disposed on computers (4, 5) spaced apart from each other by at least 5m, 10m, 20m, 50m or 100m.

3. The arrangement according to one of the preceding claims, wherein the start condition (8) comprises a time, a priority, an availability of the test environment (2) and/or a completion of another test plan (3).

4. The arrangement according to one of the preceding claims, having a plurality of test execution control tools (4), wherein each of the test execution control tools (4) is implemented to initiate the execution of a respective test plan (3) on a test environment (2) associated with the respective test execution control tool (4).

5. The arrangement according to one of the preceding claims, comprising the test environment (2), wherein the test environment (2) is implemented to initiate the execution of the test plan (3) and the test execution control tool (4) is spatially disposed on the test environment (2) associated with the test environment (2).

6. The arrangement according to one of the two preceding claims, wherein the test environment (2) is implemented as a model-in-the-loop, as a software-in-the-loop, as a processor-in-the-loop and/or as a hardware-in-the-loop environment.

7. The arrangement according to the preceding claim, wherein the test plan (3) comprises a variant configuration (11) and the test management tool (5) is implemented for checking the consistency of the variants with respect to the test plan (3) and/or the test execution control tool (4) is implemented for the configuration of the test environment (2) according to the variant configuration (11) before execution of the test plan (3) .

8. A method for testing a control device (1) by means of a test environment (2), comprising the steps:
a) developing a test plan (3) implemented as a data structure for testing the control device (1) on a computer-based test management tool (5) in the context of a model-based development of control devices, the test plan (3) comprising at least one test (6) and a start condition (8) for initiating the execution of the test plan (3),
b) storing the test plan (3) in a computer-based database (9), and
c) upon fulfillment of the start condition (8), initiating the execution of the test plan (3) on the test environment (2),
a test execution control tool (4) initiating the execution of the test plan (3) and the test plan being executed on the test environment (2) by means of a test execution tool, and the computer-based database (9) being implemented for shared, simultaneous access to the test plan (3) by the test management tool (5) and the test execution control tool (4), and both the test management tool and the test execution control tool having direct access to the test plans stored in the database and accessing the respective same test plan stored in the database, and the test plans being managed and attributed in the test management tool to describe the applicability of the test plans, and
the test execution control tool (4) and the test management tool (5) being disposed on computers (4, 5) that are spatially separate from each other and respectively independent of each other, and only the test execution tool being in direct communication with the test environment, not, however, the test execution control tool, and
comprising the step: d) exporting test data obtained by the test environment (2) from the control device (1) tested with the test plan (3) to the database (9), the test data already being returned during the implementation of the test plan.

9. The method according to the preceding claim, wherein the test plan (3) comprises a variant configuration (11), having the steps:
a') checking the consistency of the variants with respect to the test plan (3) by the test management tool (5), and/or
c') configuring the test environment (2) according to the variant configuration (11) by the test execution control tool (4) before execution of the test plan (3).

## Revendications

1. Arrangement pour tester un appareil de commande (1) au moyen d'un environnement de test (2), comprenant
un outil de gestion de tests (5) informatisé, sachant que l'outil de gestion de tests (5) se présente sous une forme pour le développement et/ou la gestion, à base d'un modèle, d'au moins un plan de test (3) se présentant sous la forme d'une structure de données pour tester l'appareil de commande (1), et le plan de test (3) comporte au moins un test (6) et une condition de démarrage (8) pour lancer l'exécution du plan de test (3),
un outil de commande d'exécution de tests (4) informatisé comportant un outil d'exécution de tests, sachant que l'outil de commande d'exécution de tests (4) est configuré sur l'environnement de test (2) à l'accomplissement de la condition de démarrage (8) pour lancer l'exécution du plan de test (3) au moyen de l'outil d'exécution de tests, et
une base de données informatisée (9), sachant que la base de données (9) est configurée pour le stockage du plan de test (3) configuré en tant que structure de données et pour un accès simultané commun au plan de test (3) par l'outil de gestion de tests (5) et l'outil de commande d'exécution de tests (4), et tant l'outil de gestion de tests que l'outil de commande d'exécution de tests ont un accès direct aux plans de test mémorisés dans la base de données et accèdent respectivement au même plan de test mémorisé dans la base de données, et sachant que les plans de test sont administrés et attribués dans l'outil de gestion de tests afin de décrire l'applicabilité des plans de test, et sachant que l'outil de commande d'exécution de tests (4) et l'outil de gestion de tests (5) sont disposés sur des ordinateurs (4, 5) qui sont distants l'un de l'autre dans l'espace et respectivement indépendants l'un de l'autre, et
sachant que seul l'outil d'exécution de tests est en communication directe avec l'environnement de test, mais pas l'outil de commande d'exécution de tests, et
sachant que l'outil de commande d'exécution de tests (4) est configuré pour transférer les données de test obtenues par l'environnement de test (2) depuis l'appareil de commande (1) testé avec le plan de test (3) vers la base de données (9),
sachant que le transfert des données de test a lieu déjà pendant l'exécution du plan de test.

2. Arrangement selon la revendication précédente, dans lequel l'outil de commande d'exécution de tests (4) et l'outil de gestion de tests (5) sont disposés sur des ordinateurs (4, 5) distants l'un de l'autre dans l'espace d'au moins 5 m, 10 m, 20 m, 50 m ou 100 m.

3. Arrangement selon l'une des revendications précédentes, dans lequel la condition de démarrage (8) comprend un temps d'horloge, une priorité, une disponibilité de l'environnement de test (2) et/ou un achèvement d'un autre plan de test (3).

4. Arrangement selon l'une des revendications précédentes, avec une multitude d'outils de commande d'exécution de tests (4), sachant que chacun des outils de commande d'exécution de tests (4) est configuré pour lancer l'exécution d'un plan de test (3) respectif sur un environnement de test (2) attribué audit outil de commande d'exécution de tests respectif (4).

5. Arrangement selon l'une des revendications précédentes, comprenant l'environnement de test (2), sachant que l'environnement de test (2) est configuré pour lancer l'exécution du plan de test (3) et l'outil de commande d'exécution de tests (4) est attribué spatialement à l'environnement de test (2) et agencé à l'environnement de test (2) .

6. Arrangement selon l'une des deux revendications précédentes, dans lequel l'environnement de test (2) est configuré en tant qu'environnement de type « modèle dans la boucle », de type « logiciel dans la boucle », de type « processeur dans la boucle » et/ou de type « matériel dans la boucle ».

7. Arrangement selon la revendication précédente, dans lequel le plan de test (3) comprend une configuration de variantes (11) et l'outil de gestion de tests (5) est configuré pour vérifier la cohérence des variantes par rapport au plan de test (3) et/ou l'outil de commande d'exécution de tests (4) est configuré pour configurer l'environnement de test (2) conformément à la configuration de variantes (11) avant l'exécution du plan de test (3).

8. Procédé pour tester un appareil de commande (1) au moyen d'un environnement de test (2), comprenant les étapes suivantes :
a) développement d'un plan de test (3) configuré en tant que structure de données pour tester l'appareil de commande (1) dans le cadre d'un développement, basé sur un modèle, d'appareils de commande sur un outil de gestion de tests (5) informatisé, sachant que le plan de test (3) présente au moins un test (6) et une condition de démarrage (8) pour lancer l'exécution du plan de test (3),
b) mémoriser le plan de test (3) dans une base de données informatisée (9), et
c) à l'accomplissement de la condition de démarrage (8), lancer l'exécution du plan de test (3) dans l'environnement de test (2),
sachant que
le lancement de l'exécution du plan de test (3) est effectué par un outil de commande d'exécution de tests (4) et l'exécution du plan de test sur l'environnement de test (2) est effectuée au moyen d'un outil d'exécution de tests, et la base de données informatisée (9) est configurée pour un accès simultané commun au plan de test (3) par l'outil de gestion de tests (5) et l'outil de commande d'exécution de tests (4) et tant l'outil de gestion de tests que l'outil de commande d'exécution de tests ont un accès direct aux plans de test mémorisés dans la base de données et accèdent respectivement au même plan de test mémorisé dans la base de données, et sachant que les plans de test sont administrés et attribués dans l'outil de gestion de tests afin de décrire l'applicabilité des plans de test, et
sachant que l'outil de commande d'exécution de tests (4) et l'outil de gestion de tests (5) sont disposés sur des ordinateurs (4, 5) qui sont distants l'un de l'autre dans l'espace et respectivement indépendants l'un de l'autre, et sachant que seul l'outil d'exécution de tests est en communication directe avec l'environnement de test, mais pas l'outil de commande d'exécution de tests, et
comprenant l'étape consistant à : d) transférer les données de test obtenues par l'environnement de test (2) depuis l'appareil de commande (1) testé avec le plan de test (3) vers la base de données (9), sachant que le transfert des données de test a lieu déjà pendant l'exécution du plan de test.

9. Procédé selon la revendication précédente, dans lequel le plan de test (3) comprend une configuration de variantes (11) avec les étapes :
a') vérification de la cohérence des variantes par rapport au plan de test (3) par l'outil de gestion de tests (5), et/ou
c') configuration de l'environnement de test (2) conformément à la configuration de variantes (11) avant l'exécution du plan de test (3) par l'outil de commande d'exécution de tests (4).
